(19) Europäisches Patentamt
European Patent Office
Office européen des brevets

(11) **EP 2 958 800 B1**

(12) **EUROPÄISCHE PATENTSCHRIFT**

(45) Veröffentlichungstag und Bekanntmachung des Hinweises auf die Patenterteilung:
**17.05.2017 Patentblatt 2017/20**

(21) Anmeldenummer: **15711779.7**

(22) Anmeldetag: **25.03.2015**

(51) Int Cl.:
**B64C 1/40** (2006.01)     **B64C 27/02** (2006.01)
**B64C 27/52** (2006.01)     **B64C 27/82** (2006.01)

(86) Internationale Anmeldenummer:
**PCT/EP2015/056328**

(87) Internationale Veröffentlichungsnummer:
**WO 2015/165651 (05.11.2015 Gazette 2015/44)**

(54) **TRAGSCHRAUBER**

GYROPLANE

AUTOGYRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.04.2014 DE 102014006112**

(43) Veröffentlichungstag der Anmeldung:
**30.12.2015 Patentblatt 2015/53**

(73) Patentinhaber: **AutoGyro AG**
**9100 Herisau (CH)**

(72) Erfinder:
• **BIRKNER, Otmar**
**31137 Hildesheim (DE)**

• **MEIER, Gerhard T.**
**CH-5330 Bad Zurzach (CH)**

(74) Vertreter: **Plöger, Jan Manfred**
**Gramm, Lins & Partner**
**Patent- und Rechtsanwälte PartGmbB**
**Theodor-Heuss-Strasse 1**
**38122 Braunschweig (DE)**

(56) Entgegenhaltungen:
**EP-A1- 2 279 943**     **EP-A2- 2 719 621**
**WO-A1-2012/064344**     **US-A- 4 010 919**
**US-A1- 2009 152 400**     **US-A1- 2010 001 120**

**Beschreibung**

Die Erfindung betrifft einen Tragschrauber mit einem Schubpropeller, einem Heckleitwerk und einem Kielrohr, mittels dem das Heckleitwerk befestigt ist.

Tragschrauber, wie sie beispielsweise aus der EP 2 279 943 A1, der DE 10 2009 040 278 A1 und der DE 10 2008 044 461 A1 bekannt sind, emittieren Schall, was unerwünscht ist. Es wird daher versucht, die Schallemissionen zu verringern. Dabei sollen die Schallschutzmaßnahmen die Flugeigenschaften des Tragschraubers möglichst wenig beeinflussen und zudem zu keinem oder nur zu einem geringen zusätzlichen Gewicht führen. Es hat sich herausgestellt, dass dies schwierig zu erreichen ist.

Aus der DE 298 18 392 U1 ist ein Tragschrauber bekannt, dessen Schubpropeller von einem Ringflügel umgeben ist, so dass sich ein Impeller ergibt. Nachteilig an einem derartigen Tragschrauber ist das vergleichsweise hohe Gewicht, so dass die Nutzlast verringert ist.

Aus der DE 42 42 332 A1 ist bekannt, Schallreflektoren unterhalb des Antriebsaggregats von Fluggeräten anzuordnen, so dass Schall vom Boden weg reflektiert wird. Eine derartige Schallreflektionsvorrichtung benötigt viel Platz und reduziert zudem die Nutzlast.

Aus der EP 2 279 943 A1 ist ein Tragschrauber bekannt, der zum senkrechten Starten in der Lage ist. Aussagen zur Lärmvermeidung finden sich in der Druckschrift nicht.

Aus der US 4 010 919 A ist ein Tragschrauber bekannt, der einen Impeller besitzt, um den Schub zu erzeugen. Tragschraubern mit Impellern emittieren häufig weniger Schall, nachteilig an einem Impeller sind aber der zusätzliche Bauaufwand und das zusätzliche Gewicht.

Der Erfindung liegt die Aufgabe zugrunde, den Schallschutz an einem Tragschrauber zu verbessern.

Die Erfindung löst das Problem durch einen gattungsgemäßen Tragschrauber, bei dem die Verbindung eine Schalldämpfstruktur aufweist. Die Erfindung löst das Problem zudem durch die Verwendung eines Schalldämpfers am Kielrohr eines Tragschraubers.

Vorteilhaft an dem erfindungsgemäßen Tragschrauber ist, dass die Schallimmissionen, also die Schalleinwirkung, die ein Tragschrauber auf seine Umgebung bewirkt, mit einfachen Mitteln verringerbar ist. Es hat sich nämlich herausgestellt, dass ein signifikanter Teil der Lärmimmission durch Lärmemissionen des Tragschraubers hervorgerufen wird, wenn er am Boden ist oder sich in Bodennähe befindet. Der Grund dafür ist, dass in diesem Fall der Abstand zwischen dem Tragschrauber und einer Person kleiner ist als wenn der Tragschrauber sich auf Flughöhe befindet. Es hat sich zudem herausgestellt, dass ein signifikanter Teil des Lärms durch die Interaktion von Rotorblattspitzenwirbeln, die vom Schubpropeller hervorgerufen werden, mit der Verbindung hervorgerufen wird, wobei der Mechanismus der Lärmentstehung im Detail noch nicht verstanden ist. Der so verursachte Lärm wird durch die Erfindung vermindert.

Es hat sich überraschend gezeigt, dass Veränderungen am Schubpropeller nur einen relativ geringen Einfluss auf die Lärmentwicklung des Tragschraubers insbesondere am Boden haben. Hingegen bewirkt eine Schalldämpferstruktur an der Verbindung, beispielsweise am Kielrohr, eine merkbare Verringerung der Schallemissionen. Dieser Befund ist deshalb überraschend, weil erwartet wurde, dass Lärm, der von der komplexen Wechselwirkung zwischen einem vom Propeller erzeugten Rotorblattspitzenwirbel und der Verbindung hervorgerufen wird, nicht durch einfache Maßnahmen vermindert werden kann. Es war vielmehr zu erwarten, dass - wie bei einem Hubschrauber - der Lärm überwiegend durch eine Wechselwirkung der Propellerspitzen mit dem Rotorblattspitzenwirbel verursacht wird, der von der in Drehrichtung vorlaufenden Propellerspitze erzeugt wurde. Es hat sich jedoch herausgestellt, dass dies nicht der Fall ist.

Im Rahmen der vorliegenden Beschreibung wird unter dem Schubpropeller ein Propeller verstanden, der in Flugrichtung des Tragschraubers hinter dem Cockpit angeordnet ist. Selbstverständlich ist es möglich, dass der Tragschrauber mehr als einen Schubpropeller aufweist. Es ist möglich, dass der Schubpropeller nicht unmittelbar hinter dem Cockpit angeordnet ist, sondern beispielsweise seitlich davon versetzt. Maßgeblich ist, dass Rotorblattspitzenwirbel auf das Kielrohr treffen und dort hörbaren Lärm verursachen.

Insbesondere ist der Schubpropeller freistehend angeordnet. Hierunter wird insbesondere verstanden, dass er unverkleidet ist und insbesondere nicht als Impeller ausgebildet ist.

Unter der Verbindung wird eine Struktur, insbesondere ein Rohr, verstanden, die einen Rumpf des Tragschraubers mit einem Heckleitwerk verbindet. Es ist möglich, nicht aber notwendig, dass die Verbindung aus einem anderen Material besteht als der Rumpf des Tragschraubers.

Unter einem Kielrohr wird insbesondere ein Rohr verstanden, das entlang einer gedachten Kiellinie verläuft. Insbesondere ist das Kielrohr in einem unteren Bereich des Rumpfs angebracht. Es ist möglich und stellt eine bevorzugte Ausführungsform dar, dass das Kielrohr einen elliptischen, insbesondere kreisrunden Querschnitt hat, das ist aber nicht notwendig. Beispielsweise kann der Querschnitt auch mehreckig sein. Es ist zudem möglich, dass sich der Querschnitt entlang einer Längserstreckung des Kielrohrs ändert.

Es ist möglich, nicht aber notwendig, dass die Verbindung mit dem Rumpf verbunden ist, das heißt, dass zwischen beiden eine Fügestelle vorhanden ist. Es ist auch möglich, dass die Verbindung durch einen Fortsatz des Rumpfs gebildet ist. In diesem Fall kann die Verbindung einstückig mit einem Bestandteil des Rumpfs, beispielsweise einer Außenschale des Rumpfs, verbunden sein.

Es ist möglich, nicht aber notwendig, und stellt eine bevorzugte Ausführungsform dar, dass die Verbindung zumindest abschnittsweise hohl ist. Es ist auch möglich, dass die Verbindung aus Vollmaterial aufgebaut ist.

Es ist bevorzugt, wenngleich nicht notwendig, dass die Verbindung aus Metall aufgebaut ist oder Metall umfasst. Bekannte Tragschrauber besitzen oft eine Verbindung, nämlich ein Kielrohr, aus Metall, da Metall eine hohe Festigkeit besitzt und Alterungsschäden leicht feststellbar sind.

Alternativ oder zusätzlich kann die Verbindung jedoch auch zumindest teilweise aus einem nichtmetallischen Werkstoff aufgebaut sein. Beispielsweise kann die Verbindung eine tragende, vorzugsweise röhrenförmige, Struktur aus faserverstärktem Kunststoff, beispielsweise glasfaserverstärktem und/oder kohlenstofffaserverstärktem Kunststoff, aufweisen. Das ist besonders dann vorteilhaft, wenn - wie gemäß einer bevorzugten Ausführungsform vorgesehen - der Rumpf ebenfalls eine Außenschale aus faserverstärktem Kunststoff besitzt.

Es ist möglich, nicht aber notwendig, dass die Verbindung zumindest abschnittsweise einen ovalen und/oder ellipsoiden und/oder kreisförmigen Querschnitt besitzt. Ein kreisförmiger Querschnitt ist in der Regel vorteilhaft, da derartige Kielrohre einfach zu fertigen sind.

Unter dem Merkmal, dass die Verbindung, insbesondere das Kielrohr, eine Schalldämpfstruktur aufweist, wird insbesondere verstanden, dass die Verbindung so ausgebildet ist, dass sie im Vergleich zu einer Verbindung mit kreisrundem Querschnitt bei einer Drehfrequenz des Schubpropellers von 2000 Umdrehungen pro Minute eine um zumindest um 5 dB(a) geringere Schallemission in einem Abstand von 5 Metern zeigt, als eine Verbindung ohne die Schalldämpfstruktur.

Wenn die Schalldämpfstruktur nicht als mit der Verbindung verbundenes, separates Bauteil ausgebildet ist, wird insbesondere nur der Bereich als Schalldämpfstruktur betrachtet, dessen Breite zumindest das 1,5-fache, vorzugsweise zumindest das Doppelte, der Breite der Verbindung beträgt, im Fall eines Kielrohrs also einer Kielrohrbreite. Die Breite der Schalldämpfstruktur und die Breite der Verbindung, insbesondere die Kielrohrbreite, werden jeweils durch senkrechte Projektion auf die Horizontalebene bestimmt.

Vorzugsweise verläuft die Verbindung entlang einer Drehachse des Schubpropellers. Hierunter wird insbesondere verstanden, dass entlang einer Längsachse des Tragschraubers auf Höhe einer Propellerebene ein Winkel zwischen der Drehachse des Schubpropellers und der Verbindung betragsmäßig höchstens 30°, insbesondere höchstens 20°, beträgt.

Gemäß einer bevorzugten Ausführungsform ist die Schalldämpfstruktur zumindest auch unterhalb des Schubpropellers angeordnet. Überraschenderweise hat sich gezeigt, dass es auch und zu einem großen Teil unterhalb des Schubpropellers zu einer Wechselwirkung zwischen Rotorblattspitzenwirbel und dem Kielrohr kommt. Es wäre zu erwarten gewesen, dass diese Rotorblattspitzenwirbel durch den Luftstrom, der vom Schubpropeller erzeugt wird, in Richtung des Hecks des Tragschraubers fortgetragen werden, so dass sie weiter in Richtung Heck an das Kielrohr schlagen. Es hat sich jedoch herausgestellt, dass auch und gerade unterhalb des Schubpropellers signifikanter Lärm erzeugt wird. Die Lärmentstehung in diesem Bereich wird durch die Schalldämpfstruktur vermindert.

Vorzugsweise ist die Schalldämpfstruktur zumindest auch, vorzugsweise aber ausschließlich, in einem Schalldämpfer-Bereich entlang einer Längsachse des Tragschraubers ausgebildet, wobei der Schalldämpfer-Bereich durch alle solche Punkte der Verbindung gebildet ist, für die gilt, dass eine Verbindungslinie des jeweiligen Punkts mit einem Schnittpunkt aus der Schubpropeller-Drehachse und einer Propellerebene, in der der Propeller rotiert, in einem Winkelintervall von -10° bis 30° liegt. Ein negativer Winkel bedeutet dabei, dass der Winkel zum Cockpit hin orientiert ist. Es hat sich gezeigt, dass auf diese Weise ein guter Kompromiss zwischen dem zusätzlichen Gewicht des Tragschraubers einerseits und der erreichbaren Schallemissionsminderung andererseits erreichbar ist.

Die Schalldämpfstruktur ist, vorzugsweise zumindest auch, vorzugsweise aber ausschließlich, in einem Schalldämpfer-Bereich entlang einer Längsachse des Tragschraubers ausgebildet, wobei der Schalldämpfer-Bereich durch alle solche Kielrohr-punkte des Kielrohrs gebildet ist, für die gilt, dass eine Verbindungslinie des jeweiligen Kielrohr-Punkts mit einem Schnittpunkt aus der Schubpropeller-Drehachse und einer Propellerebene, in der der Propeller rotiert, in einem Winkelintervall von -10° bis 30° liegt. Ein negativer Winkel bedeutet dabei, dass der Winkel zum Cockpit hin orientiert ist. Es hat sich gezeigt, dass auf diese Weise ein guter Kompromiss zwischen dem zusätzlichen Gewicht des Tragschraubers einerseits und der erreichbaren Schallemissionsminderung andererseits erreichbar ist.

Vorzugsweise ist die Schalldämpfstruktur bezüglich einer vertikalen Längsebene des Tragschraubers asymmetrisch. Diese vertikale Längsebene verläuft streng vertikal und durch den geometrischen Schwerpunkt des Kielrohrs. Vorzugsweise ist die Schalldämpfstruktur stromlinienförmig ausgebildet bezüglich einer Anströmung mit Luft in horizontaler Richtung quer zur Längsachse. So bietet die Schalldämpfstruktur dem Windstrom, der durch den Schubpropeller verursacht wird, einen besonders geringen Widerstand. Vorzugsweise ist die Krümmung der Schalldämpfstruktur am anströmseitigen Ende kleiner als am abströmseitigen Ende.

Es ist möglich und stellt eine bevorzugte Ausführungsform dar, dass die Schalldämpfstruktur zumindest auch durch den Querschnitt der Verbindung zwischen Heckleitwerk und Rumpf, insbesondere des Kielrohrs, gebildet ist.

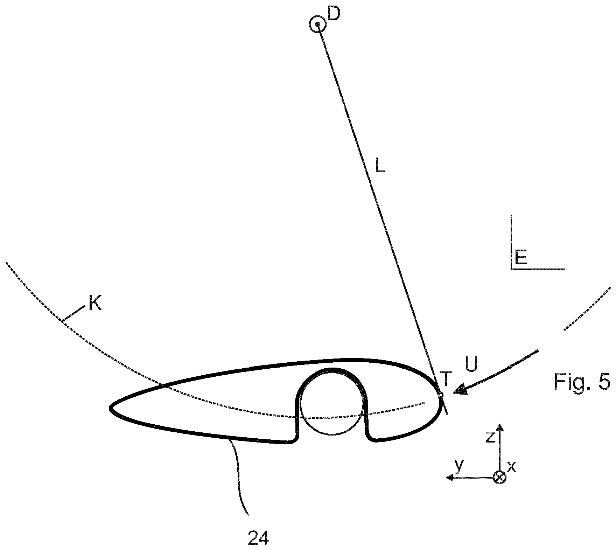

Gemäß einer bevorzugten Ausführungsform hat die Schalldämpfstruktur bezüglich einer Anströmung mit Luft, beispielsweise mit einer Strömungsgeschwindigkeit von 30 km/h, in Umfangsrichtung des Schubpropellers bezüglich des in Strömungsrichtung vordersten Punkts der Schalldämpfstruktur einen Luftwiderstandsbeiwert $c_w$ von höchstens 0,25, insbesondere von höchstens 0,20. Unter der Anströmung in Umfangsrichtung wird eine Anströmung in der Propellerebene, in der der Schubpropeller rotiert, oder einer dazu parallelen Ebene verstanden. Die Bestimmung der Anströmrichtung wird unten mit Bezug auf Figur 5 beschrieben. Durch den geringen Luftwiderstandsbeiwert kommt es zu einer nur geringen Interaktion zwischen Luftwirbeln vom Schubpropeller und der Verbindung, was die Lärmemissionen verringert.

Besonders bevorzugt hat die Schalldämpfstruktur bezüglich einer Anströmung mit Luft in horizontaler Richtung entlang der Propellerebene, beispielsweise mit einer Strömungsgeschwindigkeit von 30 km/h, einen Luftwiderstandsbeiwert von höchstens 0,25, insbesondere höchstens 0,20. Der Luftwiderstandsbeiwert wird gemessen, indem die Schalldämpfstruktur mit einer laminaren Strömung in der angegebenen Richtung angeströmt und dabei wird die Kraft ermittelt wird, die dieser Luftstrom auf die Schalldämpfstruktur ausübt. Der Luftwiderstandsbeiwert wird berechnet gemäß der Formel

$$c_w = \frac{2 \cdot F_w}{\rho v^2 A}$$

wobei $F_w$ die Widerstandskraft ist, $\rho$ die Dichte der Luft, v die Geschwindigkeit der Luft (im vorliegenden Fall also 30 km/h) und A die Stirnfläche der Schalldämpfstruktur. Auf diese Weise führen Geschwindigkeitsschwankungen aufgrund von Wirbeln zu einer kleinen resultierenden Kraft auf das Kielrohr und zu weniger Schall.

Die Schalldämpfstruktur ist bevorzugt an einer Verbindung zwischen einem Rumpf und dem Heckleitwerk ausgebildet. Insbesondere ist diese Verbindung, bei der es sich um ein Kielrohr oder zwei Befestigungsholme handeln kann, so ausgebildet, dass ein Luftwiderstandsbeiwert bezüglich einer Anströmung mit Luft in einer Umfangsrichtung des Schubpropellers höchstens 0,25, insbesondere höchstens 0,20, beträgt.

Besonders günstig ist es, wenn die Schalldämpfstruktur eine Breite B, die senkrecht zur Längsachse des Tragschraubers gemessen wird, besitzt, wobei diese Breite zumindest 10 cm beträgt. Günstig ist es, wenn die Breite B kleiner ist als 50 cm. Die Breite wird insbesondere in die Richtung gemessen, die senkrecht zu der kürzesten Verbindungslinie zwischen der Schalldämpfstruktur und der Schubpropeller-Drehachse des Schubpropellers verläuft.

Vorzugsweise besitzt die Schalldämpfstruktur zudem eine Länge T entlang der Längsachse L des Tragschraubers, wobei die Länge T vorzugsweise größer ist als 20 cm. Günstig ist es zudem, wenn die Länge T kleiner ist als 80 cm.

Gemäß einer bevorzugten Ausführungsform ist ein Verhältnis von Breite zur Höhe größer als zwei, insbesondere größer als vier. Die Höhe verläuft senkrecht zu der Breite und der Länge.

Vorzugsweise enthält die Schalldämpfstruktur ein schallschluckendes Material. Bei dem schallschluckenden Material kann es sich um ein Vlies, Mineralwolle und/oder Metallwolle handeln. Besonders günstig ist es, wenn die Schalldämpfstruktur einen Hohlkörper umfasst, der mehrere Öffnungen aufweist. Dabei ist das schallschluckende Material vorzugsweise im Hohlkörper angeordnet. Unter einem Hohlkörper wird aber ein Körper verstanden, der so ausgebildet ist, dass ein Vlies so in diesem angeordnet werden kann, dass es während des Flugbetriebs des Tragschraubers nicht heraus fällt.

Alternativ oder zusätzlich kann die Schalldämpfstruktur eine Vielzahl an Öffnungen aufweisen.

Besonders günstig ist es, wenn die Schalldämpfstruktur am Kielrohr ausgebildet ist, wobei das Kielrohr eine Vielzahl an Öffnungen aufweist und/oder ein schallschluckendes Material enthält. In diesem Fall entfällt ein weiteres Bauteil, wenngleich die Fertigung einer derartigen Schalldämpfstruktur aufwändiger ist. Unter dem schallschluckenden Material wird insbesondere ein faserhaltiges Material verstanden, beispielsweise Glas- oder Steinwolle.

Vorzugsweise ist die Schalldämpfstruktur als passiver Schalldämpfer ausgebildet. In anderen Worten ist es möglich und bevorzugt, wenngleich nicht notwendig, das die Schalldämpfstruktur durch ein vom Kielrohr getrenntes Bauteil gebildet ist. Der Schalldämpfer kann lösbar oder unlösbar mit dem Kielrohr verbunden sein. Es ist möglich, dass diese Verbindung stoffschlüssig, reibschlüssig oder formschlüssig ausgebildet ist.

Günstig ist es, wenn der Hohlkörper aus Kunststoff gefertigt ist. Es ergibt sich so ein gleichzeitig leichter, robuster und einfach herzustellender Schalldämpfer.

Im Folgenden wird die Erfindung anhand der beigefügten Zeichnungen näher erläutert. Dabei zeigt

Figur 1    eine perspektivische Ansicht eines erfindungsgemäßen Tragschraubers,

Figur 2    eine Seitenansicht des Tragschraubers gemäß Figur 1,

Figur 3    eine Detailansicht einer erfindungsgemäßen Schalldämpfstruktur in Form eines Schalldämpfers und

Figur 4    einen Querschnitt durch den Schalldämpfer gemäß Figur 3.

Figur 5    zeigt schematisch die Anströmungsbedingungen an der Schalldämpfstruktur.

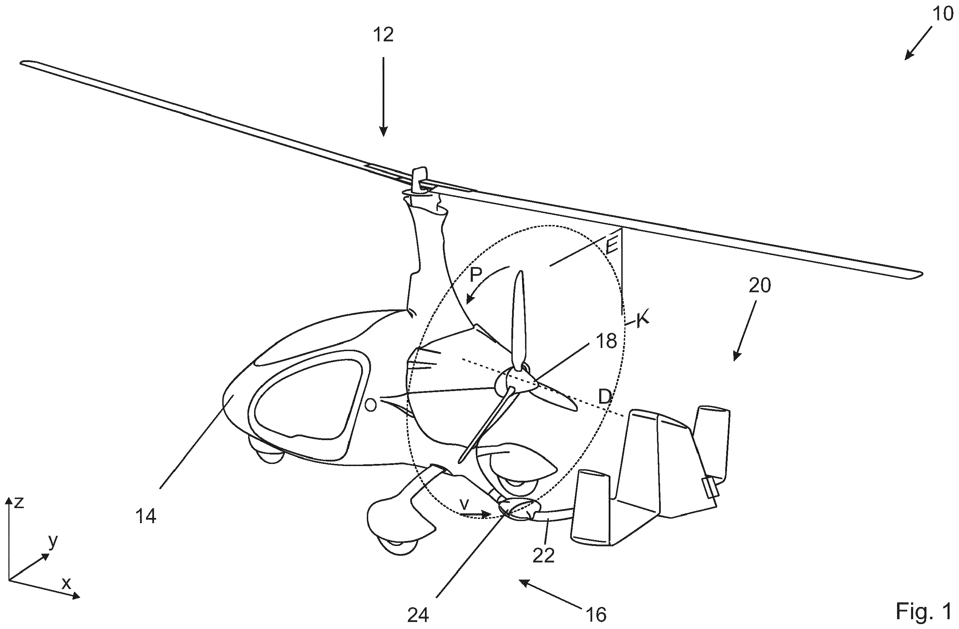

Figur 1 zeigt einen Tragschrauber 10, mit einem Rotor 12, einem Rumpf 14, einem Fahrwerk 16 und einem Schubpropeller 18. Der Tragschrauber 10 besitzt zudem ein Heckleitwerk 20, das mittels einer Verbindung 22, im vorliegenden Fall in Form eines Kielrohrs 22, mit dem Rumpf 14 verbunden ist.

Der Schubpropeller 18 rotiert im Betrieb im Uhrzeigersinn bezüglich einer Blickrichtung vom Heckleitwerk 20 in Richtung Rumpf 14, wie durch den Pfeil P angedeutet ist. Die Drehung des Schubpropellers 18 führt zu einem Luftstrom, der sich in erster Näherung schraubenförmig vom Schubpropeller 18 weg bewegt, wie durch die schematisch angedeuteten Geschwindigkeitspfeile v angedeutet ist. Das Kielrohr 22 weist eine Schalldämpfstruktur 24 auf, die im vorliegenden Fall als Schalldämpfer ausgebildet ist.

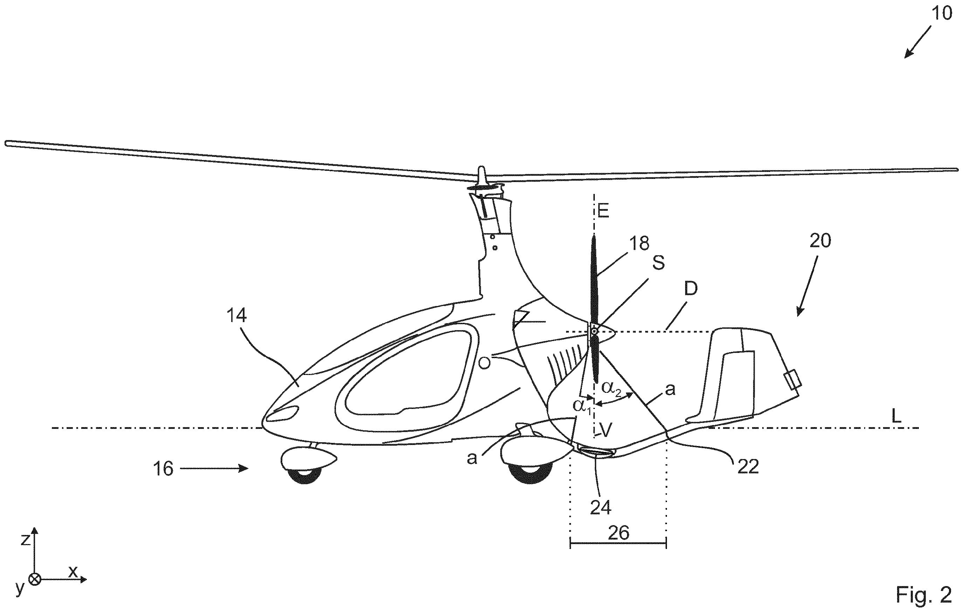

Figur 2 zeigt den Tragschrauber 10 in einer Seitenansicht. Eingezeichnet ist eine Propellerebene E, in der der Propeller 18 rotiert. Die Propellerebene E steht senkrecht auf der Papierebene. Es ist zu erkennen, dass der Schalldämpfer 24 unterhalb des Schubpropellers 18 angeordnet ist. Im vorliegenden Fall schneidet die Propellerebene E den Schalldämpfer 24.

Der Schalldämpfer 24 liegt in einem Schalldämpferbereich 26. Dieser Schalldämpferbereich 26 ist definiert durch die Punkte des Kielrohrs 22, deren Verbindungslinie a mit einem Schnittpunkt S einer Propellerdrehachse D mit der Propellerebene E unter einem Winkel α zur Vertikalen V verläuft, wobei der Winkel α in einem Winkelintervall I = [-10°, ...30°] liegt. Insbesondere ist die Schalldämpfstruktur 26 nicht mehr im Heckleitwerk 20 ausgebildet.

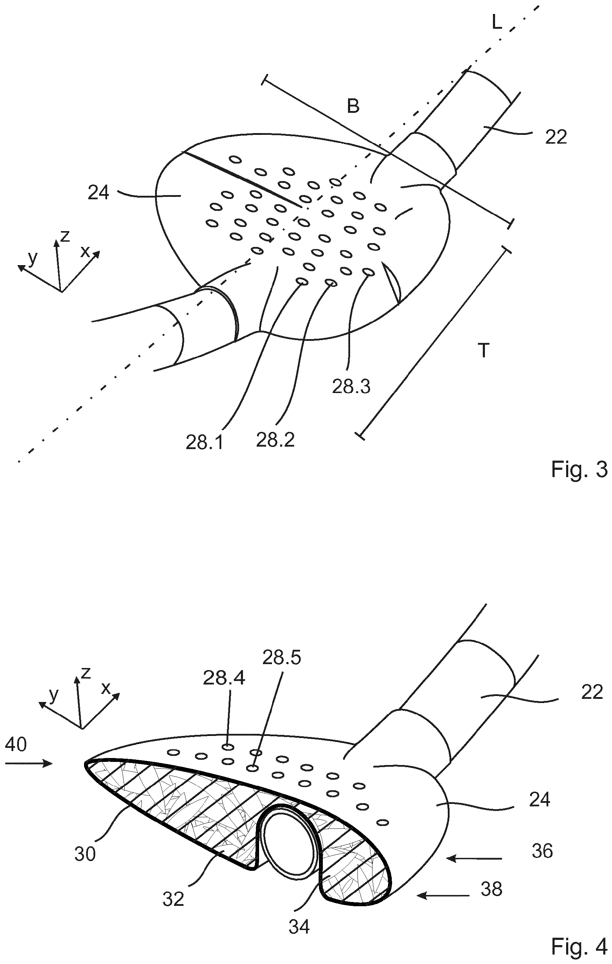

Figur 3 zeigt den Schalldämpfer 24 in einer Detailansicht. Der Schalldämpfer 24 besitzt eine Breite B, die senkrecht zur Längsachse L des Tragschraubers 10 gemessen wird. Die Breite B liegt im Bereich zwischen 10 cm und 50 cm. Eine Länge T, die entlang der Längsachse L gemessen wird, liegt vorzugsweise zwischen 30 und 80 cm.

Es ist zu erkennen, dass der Schalldämpfer 24 eine Mehrzahl an Öffnungen 28.1, 28.2, ... aufweist. Diese sind im vorliegenden Fall oval, können aber auch zumindest teilweise länglich und/oder schlitzartig und/oder zumindest teilweise rund ausgebildet sein oder eine sonstige Form haben.

Figur 4 zeigt einen Querschnitt durch den Schalldämpfer 24 bezüglich einer Ebene, die senkrecht zu einer lokalen Längsachse des Kielrohrs 22 verläuft. Es ist zu erkennen, dass der Schalldämpfer 24 einen Hohlkörper 30 umfasst, also ein Objekt, das eine äußere Hülle besitzt, die einen Innenraum 32 umgrenzt. Der Innenraum 32 ist mit schallschluckendem Material 34, im vorliegenden Fall mit Steinwolle, gefüllt. Durch die Öffnungen 28 (Bezugszeichen ohne Zählsuffix bezeichnen jeweils alle entsprechenden Objekte) tritt Schall in den Innenraum 32 ein und auf das schallschluckende Material 34 auf und wird so absorbiert.

Figur 4 zeigt zudem, dass der Schalldämpfer 24 das Kielrohr 22 so umgreift, dass das Kielrohr 22 bezüglich eines Luftstroms 36, der vom Schubpropeller 18 (vgl. Figur 2) erzeugt wird, im Windschatten liegt. Der Luftstrom trifft zumindest überwiegend auf den Schalldämpfer 24. Die Schalldämpfstruktur 24, im vorliegenden Fall also der Schalldämpfer 24, hat eine Außenkontur, die so ausgebildet ist, dass der Schalldämpfer 24 bezüglich einer Anströmung mit dem Luftstrom 36, der in horizontaler Richtung und entlang der Propellerebene E (vgl. Figur 2) den Schalldämpfer 24 anströmt, zu einem Luftwiderstandsbeiwert $c_w$ führt, der höchstens 0,25 beträgt. Mit einer Anströmung entlang der Propellerebene ist eine Luftströmung gemeint, die entweder in der Propellerebene E verläuft oder in einer Ebene parallel dazu.

Um diesen geringen Luftwiderstandsbeiwert zu erreichen, ist der Schalldämpfer 24 stromlinienförmig ausgebildet. Er besitzt an einem anströmseitigen Ende 38 eine kleinere Krümmung als an seinem abströmseitigen Ende 40.

Anstelle eines Tragschraubers kann die Erfindung auch in einem Starrflügelflugzeug realisiert sein, das anstelle des Rotors 12 Tragflächen besitzt. Die Tragflächen sind beispielsweise am Rumpf befestigt und vor dem Schubpropeller 18 angeordnet.

Figur 5 zeigt einen Querschnitt durch die Schalldämpfstruktur 24. Angedeutet ist eine Anströmung mit Luft in einer Umfangsrichtung U des Schubpropellers. Der teilweise eingezeichnete Kreis K hat seinen Mittelpunkt auf der Schubpropeller-Drehachse D. Der Kreis K hat einen Radius, der so gewählt ist, dass eine gedachte Linie L in der Propellerebene E (vgl. Figur 1) durch die Schubpropeller-Drehachse D, die die Schalldämpfstruktur 24 von der Seite in einem Punkt T tangiert, von der die Luft vom Schubpropeller zugeführt wird, den Kreis K genau in dem Punkt T schneidet. Bezüglich eines Luftstroms in der so bestimmten Umfangsrichtung U ist der Luftwiderstandsbeiwert höchstens 0,25. Ein noch kleinerer Luftwiderstandsbeiwert ist vorteilhaft.

**Bezugszeichenliste**

| 10 | Tragschrauber |
| 12 | Rotor |
| 14 | Rumpf |
| 16 | Fahrweg |
| 18 | Schubpropeller |
| 20 | Heckleitwerk |
| 22 | Kielrohr |
| 24 | Schalldämpferstruktur |
| 26 | Schalldämpfer-Bereich |
| 28 | Öffnung |
| 30 | Hohlkörper |
| 32 | Innenraum |
| 34 | schallschluckendes Material |
| 36 | Luftstrom |
| 38 | anströmseitiges Ende |

40    abströmseitiges Ende

α    Winkel
a    Verbindungslinie
B    Breite
D    Schubpropeller-Drehachse
E    Propellerebene

I    Winkelintervall
P    Pfeil
S    Schnittpunkt
T    Länge
V    Vertikale

## Patentansprüche

1. Tragschrauber mit

    (a) einem Schubpropeller (18),
    (b) einem Heckleitwerk (20) und
    (c) einem Kielrohr (22), mittels dem das Heckleitwerk (20) befestigt ist, **dadurch gekennzeichnet, dass**
    (d) das Kielrohr (22) eine Schalldämpfstruktur (24) aufweist, mittels der Lärmemissionen verringerbar sind, die vom Schubpropeller hervorgerufen werden.

2. Tragschrauber nach Anspruch 1, **dadurch gekennzeichnet, dass** der Schubpropeller (18) freistehend ist.

3. Tragschrauber nach einem der vorstehenden Ansprüche, **dadurch gekennzeichnet, dass** die Schalldämpfstruktur (24) zumindest auch unterhalb des Schubpropellers (18) angeordnet ist.

4. Tragschrauber nach Anspruch 1 oder 3, **dadurch gekennzeichnet, dass**

    - die Schalldämpfstruktur (24) zumindest auch in einem Schalldämpfer-Bereich (26) entlang einer Längsachse des Tragschraubers (10) ausgebildet ist,
    - wobei der Schalldämpfer-Bereich (26) durch alle solche Kielrohr-Punkte des Kielrohrs (22) gebildet ist, für die gilt, dass eine Verbindungslinie (a) des jeweiligen Kielrohr-Punkts mit einem Schnittpunkt aus der Schubpropeller-Drehachse (D) und einer Propellerebene (E), in der der Schubpropeller (18) rotiert, unter einem Winkelintervall (I) von -10° bis 30°, insbesondere 20°, verläuft.

5. Tragschrauber nach einem der vorstehenden Ansprüche, **dadurch gekennzeichnet, dass** die Schalldämpfstruktur (24) bezüglich einer vertikalen Längsebene des Tragschraubers (10) asymmetrisch ist.

6. Tragschrauber nach einem der vorstehenden Ansprüche, **dadurch gekennzeichnet, dass**

    - der Schubpropeller (18) eine Propellerebene (E) hat, in der der Schubpropeller rotiert, und
    - die Schalldämpfstruktur (24) bezüglich einer Anströmung mit Luft in Umfangsrichtung bezüglich des in Strömungsrichtung vordersten Punkts der Schalldämpfstruktur entlang der Propellerebene (E) einen Luftwiderstandsbeiwert (cw) von höchstens 0,25, insbesondere 0,20, hat.

7. Tragschrauber nach einem der vorstehenden Ansprüche, **dadurch gekennzeichnet, dass** die Schalldämpfstruktur (24) ein schallschluckendes Material (34) enthält.

8. Tragschrauber nach einem der vorstehenden Ansprüche, **dadurch gekennzeichnet, dass** die Schalldämpfstruktur (24) einen der Hohlkörper (30) umfasst, der mehrere Öffnungen (28) aufweist.

9. Tragschrauber nach einem der vorstehenden Ansprüche, **dadurch gekennzeichnet, dass** die Schalldämpfstruktur (24) als passiver Schalldämpfer ausgebildet ist.

10. Tragschrauber nach einem der Ansprüche 1 bis 9, **dadurch gekennzeichnet, dass** die Schalldämpfstruktur (24) am Kielrohr (22) ausgebildet ist, wobei das Kielrohr (22)

    (i) eine Vielzahl an Öffnungen aufweist und/oder
    (ii) ein schallschluckendes Material (34) enthält und/oder
    (iii) von einem schallschluckenden Material (34) umgeben ist.

## Claims

1. Autogyro with

    (a) a thrust propeller (18),
    (b) a tail unit (20) and
    (c) a keel tube (22), by means of which the tail unit (20) is secured, **characterised by** the fact that
    (d) the keel tube (22) comprises a sound-absorbing structure (24), by means of which noise emissions produced by the thrust propeller can be reduced.

2. Autogyro according to claim 1, **characterised by** the fact that the thrust propeller (18) is freestanding.

3. Autogyro according to one of the above claims, **characterised by** the fact that the sound-absorbing structure (24) is arranged at least also below the thrust propeller (18).

4. Autogyro according to claim 2 or 3, **characterised by** the fact that

   - the sound-absorbing structure (24) is formed at least also in a sound absorber region (26) along a longitudinal axis of the autogyro (10),
   - wherein the sound absorbing area (26) is made up of all keep tube points of the keel tube (22) for which it applies that a connecting line (a) of the respective keel tube point with a point of intersection from the thrust propeller rotational axis (D) and a propeller plane (E) in which the thrust propeller (18) rotates, runs below an angle interval (I) of -10° to 30°, especially 20°.

5. Autogyro according to one of the above claims, **characterised by** the fact that the sounds-absorbing structure (24) is asymmetrical in relation to a vertical longitudinal plane of the autogyro (10).

6. Autogyro according to one of the above claims, **characterised by** the fact that

   - the thrust propeller (18) has a propeller plane (E) in which the thrust propeller rotates, and
   - the sound-absorbing structure (24) has a maximum drag coefficient (cw) of 0.25, especially 0.20, in relation to an incident flow with air in the circumferential direction in relation to the foremost point in the direction of flow of the sound-absorbing structure along the propeller plane (E).

7. Autogyro according to one of the above claims, **characterised by** the fact that the sound-absorbing device (24) contains a sound-absorbing material (34).

8. Autogyro according to one of the above claims, **characterised by** the fact that the sound-absorbing structure (24) comprises one of the hollow bodies (30), which has several openings (28).

9. Autogyro according to one of the above claims, **characterised by** the fact that the sound-absorbing structure (24) is designed to be a passive silencer.

10. Autogyro according to one of the claims 2 to 9, **characterised by** the fact that the sound-absorbing structure (24) is formed on the keel tube (22), the keel tube (22) comprising

(i) a number of openings and/or
(ii) containing a sound-absorbent material (34) and/or
(iii) being surrounded by a sound-absorbent material (34).

**Revendications**

1. Autogyre comportant

   (a) une hélice de propulsion (18),
   (b) un empennage arrière (20), et
   (c) une quille (22) permettant de fixer l'empennage arrière (20),

   **caractérisé en ce que**

   (d) la quille (22) comprend une structure d'insonorisation (24) permettant de réduire l'émission de bruits causés par l'hélice de propulsion.

2. Autogyre selon la revendication 1,
   **caractérisé en ce que**
   l'hélice de propulsion (18) est disposée de manière indépendante.

3. Autogyre selon l'une des revendications précédentes,
   **caractérisé en ce que**
   la structure d'insonorisation (24) est agencée au moins également au-dessous de l'hélice de propulsion (18).

4. Autogyre selon la revendication 1 ou 3,
   **caractérisé en ce que**

   - la structure d'insonorisation (24) est réalisée au moins également dans une zone d'insonorisation (26) le long d'un axe longitudinal de l'autogyre (10),
   - la zone d'insonorisation (26) est formée à travers tous ceux des points de la quille (22) pour lesquels s'applique qu'une ligne de liaison (a) du point de quille respectif avec un point d'intersection formé par l'axe de rotation (D) de l'hélice de propulsion et par un plan d'hélice (E) dans lequel l'hélice de propulsion (18) est en rotation, s'étend sous un intervalle angulaire (I) de -10° à 30°, en particulier de 20°.

5. Autogyre selon l'une des revendications précédentes,
   **caractérisé en ce que**
   la structure d'insonorisation (24) est asymétrique par rapport à un plan longitudinal vertical de l'autogyre (10).

6. Autogyre selon l'une des revendications précédentes,
   **caractérisé en ce que**

   - l'hélice de propulsion (18) comprend un plan d'hélice (E) dans lequel l'hélice de propulsion est en rotation, et
   - la structure d'insonorisation (24) présente un coefficient de traînée (cw) de 0,25 au maximum, en particulier de 0,20 vis-à-vis d'un afflux d'air en direction périphérique par rapport au point le plus en avant en direction d'écoulement de la structure d'insonorisation le long du plan d'hélice (E).

7. Autogyre selon l'une des revendications précédentes,
   **caractérisé en ce que**
   la structure d'insonorisation (24) comprend un matériau absorbant le bruit (34).

8. Autogyre selon l'une des revendications précédentes,
   **caractérisé en ce que**
   la structure d'insonorisation (24) comprend l'un des corps creux (30) qui présente plusieurs ouvertures (28).

9. Autogyre selon l'une des revendications précédentes,
   **caractérisé en ce que**
   la structure d'insonorisation (24) est réalisée sous la forme d'un silencieux passif.

10. Autogyre selon l'une des revendications 1 à 9,
    **caractérisé en ce que**
    la structure d'insonorisation (24) est réalisée sur la quille (22), et la quille (22)

    (i) comprend une multitude d'ouvertures et/ou
    (ii) contient un matériau (34) absorbant le bruit et/ou
    (iii) est entourée par un matériau (34) absorbant le bruit.

EP 2 958 800 B1

Fig. 1

EP 2 958 800 B1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2279943 A1
- DE 102009040278 A1
- DE 102008044461 A1

- DE 29818392 U1
- DE 4242332 A1
- US 4010919 A